Europäisches Patentamt

European Patent Office

Office européen des brevets

(19)

(11) **EP 0 947 810 A1**

(12) **EUROPEAN PATENT APPLICATION**

(43) Date of publication:
06.10.1999 Bulletin 1999/40

(51) Int Cl.$^6$: **G01F 1/74**

(21) Application number: 99301389.5

(22) Date of filing: 25.02.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 26.02.1998 US 30967

(71) Applicant: **Baumoel, Joseph**
**Commack, New York 11725 (US)**

(72) Inventor: **Baumoel, Joseph**
**Commack, New York 11725 (US)**

(74) Representative: **Read, Matthew Charles et al**
**Venner Shipley & Co.**
**20 Little Britain**
**London EC1A 7DH (GB)**

(54) **Multiphase fluid flow sensor**

(57) A new non-intrusive technique for measuring the relative amount of each individual phase in a multiphase fluid is disclosed, which also provides certain flow rate information. The inventive technique is based on the measurement of displacement current which flows in a field created by electrodes located in or on the walls of a pipe through which the fluid flows. The inventive technique was a database, obtained, for example, by empirical measurements, which relates specific values of specific parameters of the displacement current (e.g., phase and magnitude) to specific known states inside the pipe, for example, particular percentages of each phase in a multiphase flow, such as an oil/gas/water mixture. Then, a measurement of current of an actual pipe in the field, the phase and magnitude (envelope) of a displacement current is obtained. This data may be outputted in digital form and transmitted to a remote computer located remotely. With the aid of the computer the predetermined database is used to correlate the actually measured phase and magnitude measurement with a particular state inside the pipe, e.g., an oil/gas/water mixture with a particular amount of each phase. In some circumstances, the measurements based on displacement current may not provide sufficient information about the state of a multiphase fluid in the pipe. To obtain additional or, in some cases, more accurate results, it is desirable to utilize a more extensive predetermined database which may include other parameters besides those resulting from the displacement current measurement, i.e., parameters obtained from other non-intrusive flow metering techniques, such as transit-time, reflexor, and bubble detection. Thus, this predetermined database contains a multidimensional mapping between particular parameter values and known particular states or conditions inside the pipe. In this case, to perform an actual measurement to obtain data about what is going on in the pipe, parameters from a plurality of actual non-intrusive measurements, including magnitude and phase parameters from a displacement measurement are obtained and converted to digital form. These parameters are transmitted to a computer which is located remotely from the pipe being measured. The computer uses the predetermined database to identify the condition inside the pipe which most closely correlates with the actually measured parameters. In this way, information about the state inside the pipe is obtained non-intrusively without the use of any equation of state.

FIG. 10

## Description

### Field of the Invention

The present invention relates to a sensor and a method for determining the relative amount of each individual fluid phase in a multiphase fluid. The present invention also relates to a method for determining the flow velocity of the individual fluid phases in the multiphase fluid.

In particular, the present invention relates to sensing the relative amounts and flow rates of the individual phases of an oil/gas/water mixture present at the well head of a typical oil well.

### Background of the Invention

An important application of the present invention is at a well head where oil is produced as part of an oil/gas/water mixture. The information obtained as a result of the sensing techniques of the present invention may be used to optimize the performance of the well, to recondition the well, or to abandon the well. For example, if the amount of gas exceeds 50% it may not be economical to continue operating the well. Or, the well may be packed to stuff gas fissures.

Presently, for an offshore oil well, an oil/gas/water mixture is separated at the well head. Typically, the oil is pumped to shore, the gas is burned, and the water is pumped to sea. It is preferable to transmit the multiphase mixture to shore and do the separation there. However, in order to allocate the multiphase mixture to a common pipeline, it is desirable to know the relative amounts of each phase. It may also be desirable to obtain flow rate information for the multiphase fluid. It should be noted that an oil well head is usually in a very harsh environment, e.g., thousands of feet below sea level for an offshore well. This is one example where the inventive multiphase fluid flow sensing technique is valuable. The invention is useful for other applications as well.

There can be various arrangements of the individual phases of the multiphase flow. For example, if the pipeline is horizonal, the gas may go to the top of the pipe. The flow rate of the gas at the top of the pipe may be different from the flow rate of the other phases in the fluid. Alternatively, the gas may come down the pipeline in discrete bursts.

It is desirable to determine information about the relative amounts of the various phases and their flow rates non-intrusively. This means that the transducer/sensor devices are not located within the interior of the pipe.

One conventional non-intrusive technique for determining the flow rate of fluid in a pipe is known as the transit-time technique. According to this technique, a first ultrasonic transducer/sensor device is positioned at a first location on the outside wall of the pipe. A second ultrasonic transducer/sensor device is positioned at a second location on the outside wall of the pipe downstream from the first location. A first time $t_1$ for sonic energy to propagate codirectionally with the flow from the first device to the second device is measured. A second time $t_2$ for sonic energy to propagate from the second device to the first device counterdirectionally to the flow is also measured. The flow rate F is given by:

$$F = k\frac{\Delta t}{\tau_L} k\frac{(t_2 - t_1)}{\tau_L}$$

where k is a proportionality constant and $\tau_L$ is the average liquid path transit-time. Such non-intrusive sensing equipment is available from Controlotron, the assignee of the present application.

Another approach to non-intrusive flow measurement is the reflexor. This approach is based on the phenomenon that sonic energy of a particular frequency incident on particles in a flowing fluid is reflected at a different frequency. This is a manifestation of the Doppler effect. The difference in frequency is proportional to the flow rate.

Another non-intrusive sensing technique is a bubble detector. Ultrasonic signals are reflected by bubbles in the fluid and detected. Based on the arrival times and strength of the reflected signals as received at a detector, it is possible to deduce information about what is going on inside the pipe.

Prior art non-intrusive sensing technique are disclosed in U.S. Patent Nos. 4,333,353, 5,117,698, 5,467,321, and 5,548,530 invented and owned by the Applicant herein.

These existing non-intrusive sensing techniques do not operate under all conditions. For example, the transit-time and reflexor techniques may not operate in the presence of foam because foam absorbs sonic energy.

Accordingly, it is an object of the present invention to provide a non-intrusive sensing technique for determining the relative amount of each individual phase of a multiphase fluid flow. It is also an object of the invention to provide a non-intrusive technique for determining flow rate information for the multiphase fluid.

More particularly, it is an object of the invention to provide such a sensing technique which operates in a variety of conditions, especially conditions where the transit-time and reflexor techniques are inoperable or do not operate well.

It is a further object of the invention to provide a non-intrusive sensing technique useful in determining the relative amount and flow rate of individual phases in an oil/gas/water mixture, for example, at the head of an oil well.

It is also an object of the invention to provide a sensing technique which can operate in harsh conditions such as in deep water under high pressure.

## Summary of the Invention

The present invention provides a new non-intrusive technique for measuring the relative amount of each individual phase in a multiphase fluid. The present invention also provides certain flow rate information. The inventive technique is based on the measurement of displacement current which flows in a field created by electrodes located in or on the walls of a pipe through which the fluid flows. The inventive technique involves use of a database, obtained, for example, by empirical measurements, which relates specific values of specific parameters of the displacement current (e.g., phase, magnitude, and other measured parameters) to specific known states inside the pipe, for example, particular percentages of each phase in a multiphase flow, such as an oil/gas/water mixture. Then, in an actual measurement of an actual pipe in the field, the phase and magnitude (envelope) of a displacement current is obtained. This data is outputted in digital form and transmitted to a computer located remotely. With the aid of the computer the predetermined database is used to correlate the actually measured phase and magnitude measurement with a particular state inside the pipe, e. g., an oil/gas/water mixture with a particular amount of each phase.

In some circumstances, the measurements based on displacement current may not provide sufficient information about the state of a multiphase fluid in the pipe. To obtain additional or, in some cases, more accurate results, it is desirable to utilize a more extensive predetermined database which may include other parameters besides those resulting from the displacement current measurement, i.e., parameters obtained from other non-intrusive flow metering techniques, such as transit-time, reflexor, and bubble detection. Thus, this predetermined database contains a multidimensional mapping between particular parameter values and known particular states or conditions inside the pipe created previously under controlled conditions. In this case, to perform an actual measurement to obtain data about what is going on in the pipe, parameters from a plurality of non-intrusive measurements, including magnitude and phase parameters from a displacement measurement are obtained and converted to digital form. These parameters are transmitted to a computer which is located remotely from the pipe being measured. The computer uses the predetermined database to identify the state inside the pipe which most closely correlates with the previously actually measured parameters. In this way, information about the state inside the pipe is obtained non-intrusively without the use of any equation of state.

The inventive technique is also suitable for determining flow rate information. A first set of actual measurements are made at one location along the pipe using e.g., a first set of electrodes to determine the state inside the pipe at the first location. A second set of measurements are made at a second location along the pipe, a known distance from the first location, using e.g., a second set of electrodes to determine the state inside the pipe at the second location. As the fluid flows in the pipe, a first set of parameters will be obtained at the first location at a first time. A similar set of parameters may be obtained at the second location at a second time. This provides information localized in time about the flow rate in the pipe.

The use of displacement current to obtain information about the state of a multiphase fluid flowing in a pipe may be understood in more detail as follows: the displacement current will be proportional to the dielectric constant of the fluid in the pipe, or to its conductivity, or to some combination of each. The phase angle of this current, relative to the phase of the exciting voltage is expressive of the relative dielectric and resistive properties of the fluid. For example, in the case of a gas/oil/water mixture, gas has a lower dielectric constant than oil, which has a lower dielectric constant than water, and water frequently contains dissolved electrolytes which would affect its net resistivity, thus indicating the presence of water.

Preferably, in order to effect a non-intrusive measurement, the electrodes are separated from the liquid by a physical barrier, such as a layer of ceramic or other low conductivity or dielectric material on the internal wall of the pipe. This material should have an area equal to the size of the electrodes, and should be thin relative to the internal space within the pipe separating the electrodes, so as to form a "virtual" capacitor, whose magnitude would be much larger than the effective capacitance due to that internal space. Thus, the net current which flows between the electrodes would depend primarily on the magnitude of the impedance formed by the liquid's dielectric and resistive properties. When filled with gas or oil, for example, this impedance would be much higher than the ceramic (or other) electrode coating. When filled with water, whose dielectric constant is much higher than gas or oil, the total impedance would be lowered and the current would be higher than with gas or oil. And when filled with a conductive liquid, such as salt water, the field within the pipe interior would be shorted out, so that the net current would be limited only by the impedance of the ceramic coating, i.e., the highest current which could flow. And if the liquid was only partially conductive, the impedance angle of the current would show a resistive component. Thus, by measuring the magnitude (envelope) and phase of such a displacement current, it is possible to determine the dielectric and resistive properties of the liquid in the pipe, which are indicators of the relative percentage of each phase.

For example, the sensor can be located in a capacitance bridge. The bridge can be balanced to produce a zero output voltage from the bridge amplifier when the liquid is purely dielectric, and when the liquid has the dielectric constant typical of a pure oil. Then, the presence of gas would serve to unbalance the bridge in the direction of reduced dielectric constant. And if instead of gas, "bubbles" of pure water were present, then the bridge would be unbalanced in the direction of increased dielectric constant. The phase angle of the current, relative to the bridge voltage, indicates either gas or water even if the amount of current in either of these cases is identical.

In the foregoing example, it is possible for both gas and water to be present at the same time, confusing the ability to distinguish between them. Therefore, other means must be used to detect the presence of gas in the presence of water. One such means depends on the relatively different sonic impedance of gas vs. oil, as compared to water vs. oil. This means that the presence of gas would serve to cause much greater sonic reflections than the presence of water, as well as much greater attenuation of a transmitted sonic beam. Such a condition can be detected by a standard Controlotron clamp-on sonic transmitter/receiver transducer combination based on the transit-time and/or reflexor techniques described above.

Because it is desired to measure flow rate as well as relative liquid constituency, the pipe section containing the electrodes, or an adjacent pipe section, will contain standard Controlotron System 1010 Transit-time and Reflexor flow rate sensing transducers. In addition, that pipe section may also contain a sonic bubble detector.

## Brief Description of the Drawings

Fig. 1 is a perspective view of a pipe section and a non-intrusive multiphase fluid sensing apparatus according to an illustrative embodiment of the invention.
Fig. 2 schematically illustrates the operation of the transit-time technique.
Fig. 3 schematically illustrates the operation of the reflexor technique.
Fig. 4 is a cross-sectional view of the pipe section and apparatus of Fig. 1 showing transit-time, reflexor, and bubble detection transducer/sensors.
Fig. 5 is a cross-sectional view of the pipe section of Fig. 1 showing how electrodes are mounted to the wall of the pipe section for non-intrusively generating and sensing displacement current.
Fig. 6 schematically illustrates the electrodes for generating and sensing displacement currents and the relationship of these electrodes to the pipe wall of the pipe interior.
Fig. 7 shows a model circuit which models the electrode and pipe system and sensing circuity for determining the magnitude and phase of displacement currents.
Fig. 8 is a plot of the magnitude and phase of displacement currents under various circumstances.
Fig. 9 shows sensing circuitry for determining the magnitude and phase of displacement currents in greater detail.
Fig. 10 shows circuitry for transmitting parameters such as magnitude and phase of a displacement current to a main computer.
Fig. 11 shows the algorithm used by the main computer to output information about the state of a multiphase fluid in a pipe.

## Detailed Description of the Invention

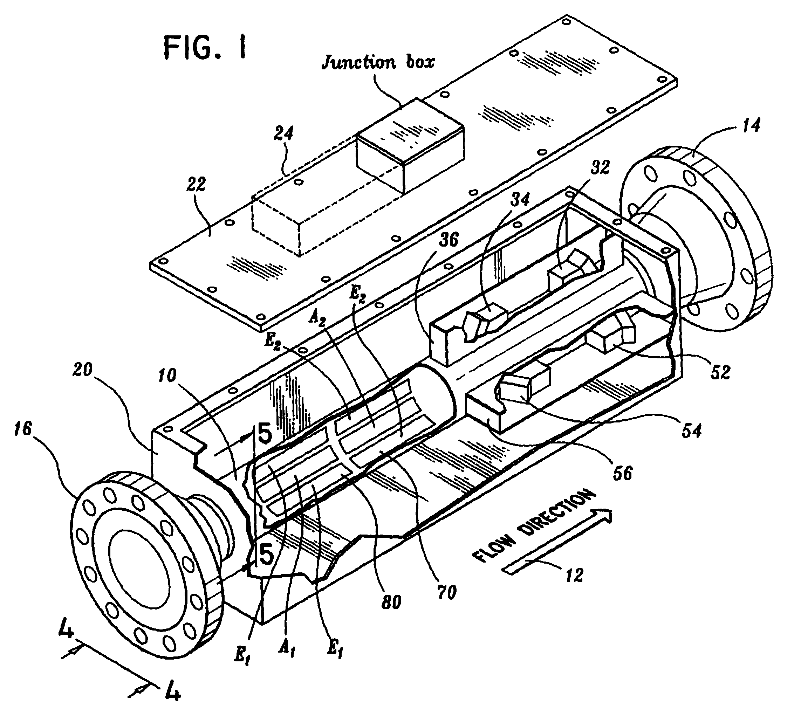

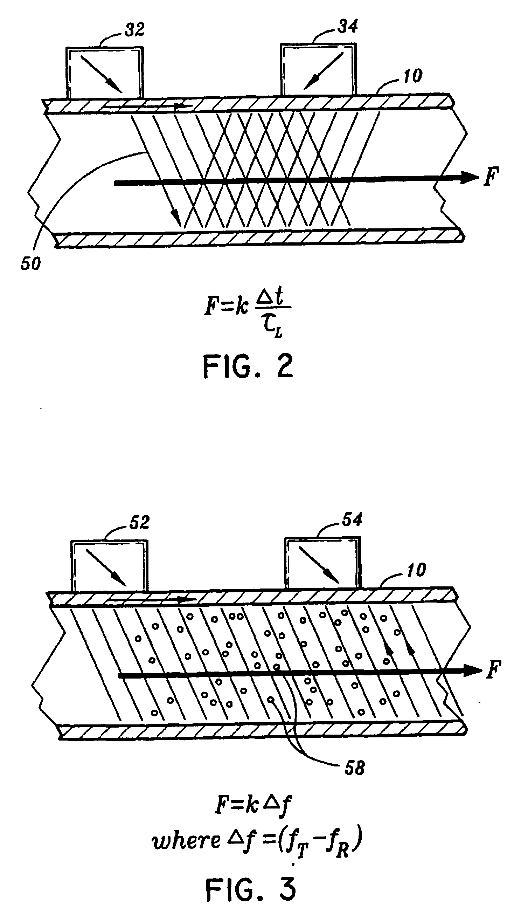

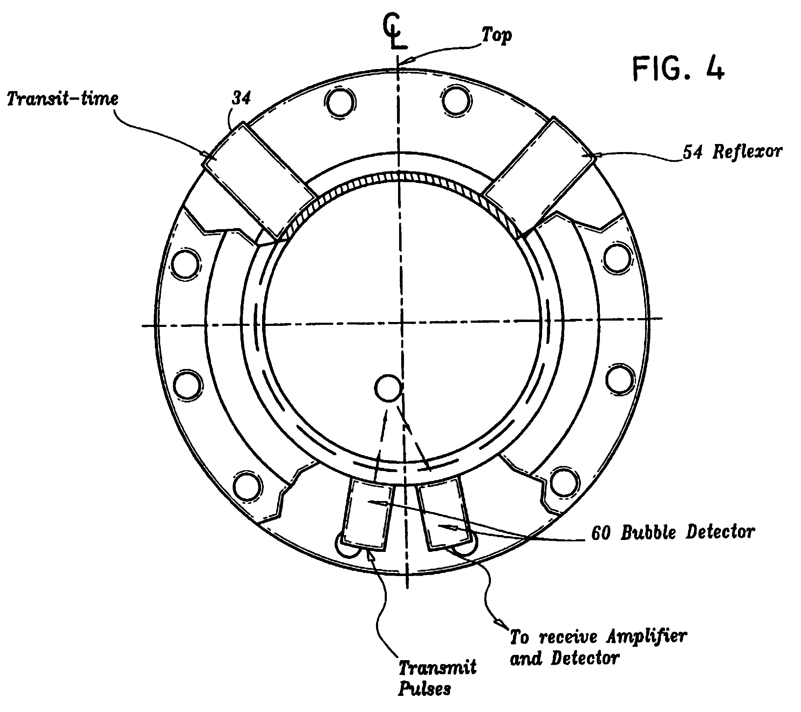

Turning to Fig. 1, there is shown a cutaway view of a section of pipe 10 in which there flows a multiphase fluid. Illustratively, the pipe section is near an oil well head and the multiphase fluid is an oil/gas/water mixture. The direction of flow of the multiphase fluid is indicated by the arrow 12.
The pipe section 10 has a first flange 14 for connection to a downstream pipe section and a second flange 16 for connection to an upstream section. Illustratively, the overall length of the pipe section 10 is from 10 inches to 48 inches dependent on pipe diameter. The diameter of the pipe section 10 (the part between the flanges) typically is from 2 inches to 60 inches.
Coupled to the wall of the pipe section 10 are transducers/sensors for performing four types of non-intrusive measurements to obtain parameters which can yield information about the state of the multiphase fluid flowing inside the pipe section. The four types of measurements are transit-time, reflexor, bubble detection, and displacement current. The transducers/sensors used to perform the measurements are described in greater detail below.
First it should be noted that the pipe section 10 is surrounded by a box-like housing 20. The housing 20 is for example 36 inches long, 12 inches wide, and 8 inches high. The housing 20 includes a cover 22. Mounted on the cover 22 is an optional electronics housing and junction box 24. The circuitry in the electronics housing and junction box 24 provides signals to and receives signals from the transducers/sensors coupled to the pipe wall. The housing 20 and cover 22 are important because they protect the transducers/sensors from a very harsh external environment such as that found at an oil well head thousands of feet below sea level.
The transducers/sensors are now considered in greater detail. There is a pair of sonic transducers/sensors for obtaining transit-time information. This pair of sonic transducers/sensors is labeled 32, 34. The sonic transducers/sensors 32, 34 are contained in a separate housing 36 inside of housing 20. Transit-time path 1 is the path between transducer/sensor 32 and transducer/sensor 34.
Illustratively, a second pair of sonic transducers/sensors (not shown) may be provided in another separate housing within the housing 20. The second pair of transducers/sensors is separated by a second transit-time path.
The operation of the transit-time transducers/sensors may be understood from Fig. 2. Fig. 2 is a longitudinal cross section of a portion of the pipe section 10. The transducer/sensor 32 and the transducer/sensor 34 are mounted on the wall of the pipe section 10. A pulse of sonic energy 50 is introduced into the fluid in the pipe section 10 by the transducer/sensor 32. The pulse of sonic energy propagates generally codirectionally with the fluid flow F. The pulse of sonic energy is detected by the transducer/sensor 34. The time of propagation of the pulse along transit-time path 1 is $t_1$.

A similar time $t_2$ is obtained by transmitting a sonic pulse along transit-time path 1 between transducer/sensor 34 and transducer/sensor 32. This second pulse propagates generally counter-directionally to the fluid flow F. The flow rate of a fluid or a phase of a multiphase fluid is given by

$$F = k(t_1 - t_2)/\tau_L$$

where k is a proportionality constant, and $\tau_L$ is the average liquid path transit-time. Note that $t_1$ and $t_2$ may be different for different phases of a multiphase flow.

Returning now to Fig. 1, also coupled to the wall of the pipe section 10 is a sonic transducer 52 and sensor 54 for implementing the reflexor technique. The transducer 52 and sensor 54 are located within the housing 56 which is contained within the housing 20.

Fig. 3 shows the operation of the reflexor technique in greater detail. Fig. 3 shows a longitudinal cross section of a portion of the pipe section 10. The transducer 52 and the sensor 54 are mounted on the wall of the pipe 10. The transducer 52 transmits a pulse of sonic energy of a particular frequency into the fluid in the pipe section 10. The sonic energy is reflected from particles 58 in the fluid and sensed by the sensor 54. The reflected sonic energy is at a different frequency than the initial sonic energy.

The flow rate F of a fluid is given by:

$$F = k\Delta f = k(f_T - f_R)$$

where $f_T$ is the transmitted frequency, $f_R$ is the reflected frequency, and $\Delta f$ is the change in frequency and k is a proportionally constant.

Also coupled to the wall of the pipe section 10 is a bubble detector. The bubble detector is not shown in Fig. 1, but can be seen in Fig. 4. Fig. 4 is a cross section of the pipe section 10 of Fig. 1 taken along view B. Fig. 4 shows the transducer/sensor 32 for transit-time path 1, and the transducer 54 for reflexor detection as well as a bubble detector 60.

In accordance with a preferred embodiment of the invention, the pipe section 10 includes electrodes for generating and sensing a displacement current which flows in a field created by the electrodes. This displacement current will be proportional to the dielectric constant of the fluid in the pipe or to its conductivity or to some combination of each. Two sets of electrodes 70, 80 are shown in Fig. 1. The set 70 comprises the electrodes $E_1$, $A_1$. The set 80 comprises the electrodes $E_2$ and $A_2$.

Each electrode is approximately 12 inches long and 1 inch wide. The circumferential spacing between adjacent electrodes in the same set is 1/8 inch. The longitidinal spacing between corresponding electrodes of the two sets is 1/4 inch.

It should be noted that the use of three electrodes in the sets 70, 80 is illustrative only. Each set may include additional electrodes located on the pipe section circumference. In order to effect a non-intrusive measurement, the electrodes are separated from the fluid in the pipe by a physical barrier such as a layer of ceramic or other low conductivity or dielectric material.

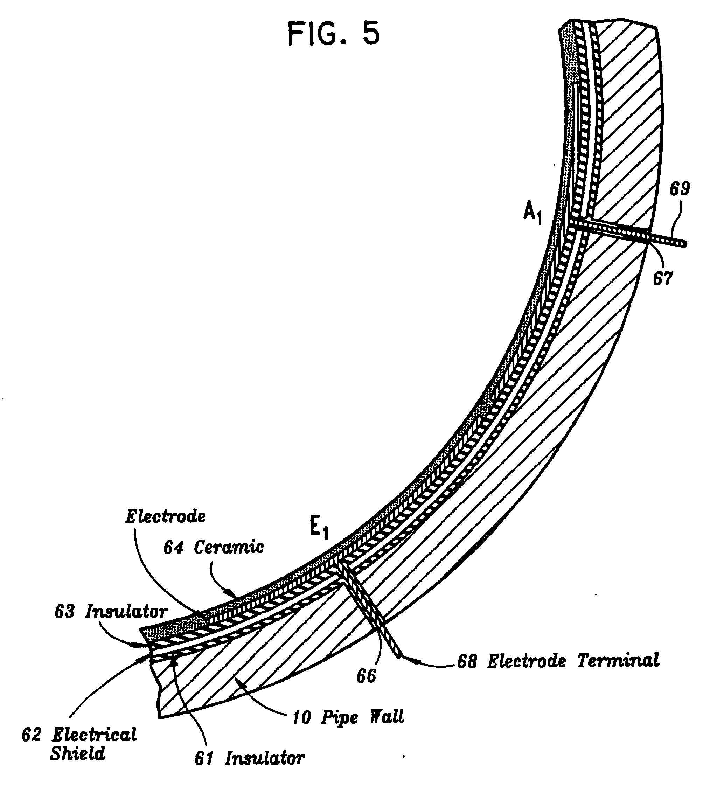

A cross-section of the pipe section 10 taken along A-A is shown in Fig. 5. As shown in Fig. 5, the inner wall of the pipe section 10 is covered with an insulator 61. This layer is made from non-conductive material and has a thickness of 1/16 - 1/8 inch. The next layer is an electrical shield layer 62 made of steel and having a thickness of 0.01 inches. The next layer is an insulator layer 63 made of teflon, for example, and having a thickness of 0.020 inches. The electrodes $E_1$ and $A_1$ are formed from steel and have a thickness of 0.01 inches. The electrodes, as well as portions of the insulator 63 not covered by the electrodes, are covered with a ceramic layer 64 and having a thickness of up to 1/8 inch at the locations which are over the electrodes. The pipe wall as well as the layers 61, 62, 63 have openings 66, 67, through which electrode terminals 68, 69, are connected to the electrodes $E_1$, $A_1$.

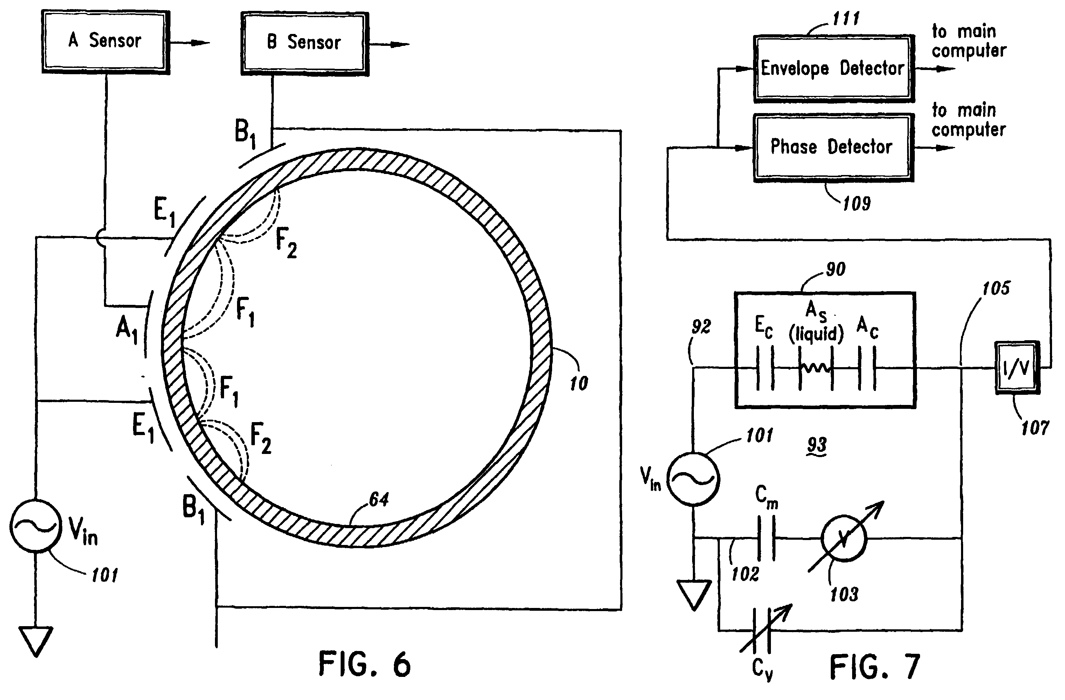

Fig. 6 illustrates the generation and detection of displacement currents using the electrodes. Fig. 6 shows the electrodes $E_1$, $A_1$ of Fig. 1 and an additional set of electrodes $B_1$ not shown in Fig. 1. These electrodes are coupled to the wall of the pipe section 10 in the manner shown in Fig. 5. The electrodes $E_1$ are driven by a variable voltage source 101 at a frequency of 0.1 to 1.0 MHz, for example to generate a displacement current in the interior of the pipe. A displacement current which flows along the electric field lines $F_1$ is detected at the electrode $A_1$. A displacement current which flows along the electric field lines $F_2$ is detected at the electrodes $B_1$.

The A sensor circuit measures the magnitude and phase of the displacement current detected at the electrode $A_1$. The B sensor circuit measures the phase and magnitude of the displacement current detected at the electrode $B_1$.

The circuit path from the electrode $E_1$ to the electrode $A_1$ may be modeled by three elements connected in series. There is a capacitive element $E_c$ which models the electrode $E_1$ and the ceramic film 64. There is a capacitive/resistive element $A_s$ which models the fluid in the pipe. There is also a capacitive element $A_c$

which models the ceramic film 64 and the electrode $A_1$. A similar set of three elements connected in series can be used to model the circuit path from the electrode $E_1$ to other electrodes such as the electrodes $B_1$ of Fig. 6 and the circuit path between the electrodes $E_2$ and $A_2$ of Fig. 1.

Fig. 7 is a circuit diagram which includes a model circuit 90 of the pipe and electrode system of Fig. 6. The model circuit 90 includes the capacitive element $E_c$, the capacitive/resistive element $A_s$, and the capacitive element $A_c$. The model circuit 90 is driven by the AC voltage source 101.

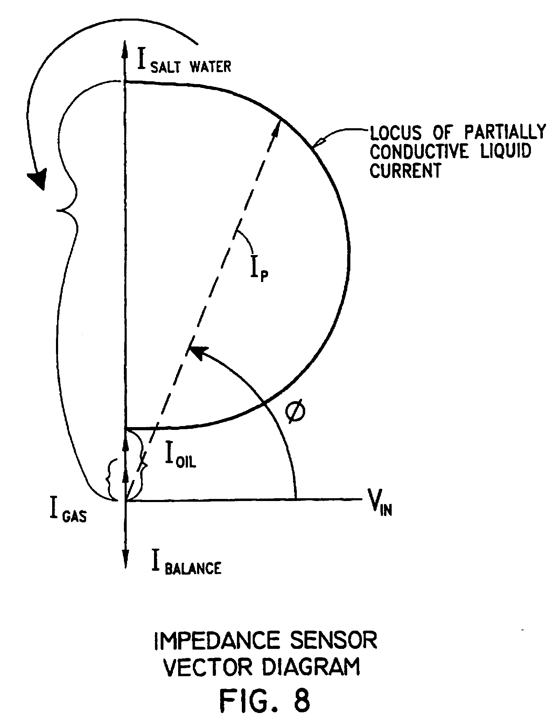

Fig. 8 is a plot of a displacement current which flows between the driving electrode $E_1$ and sensing electrode $A_1$ in the case of an oil/gas/ water mixture with different relative amounts of each phase. The net displacement current which flows between the electrodes $E_1$ and $A_1$ depends on the impedances of the circuit elements $E_c$, $A_s$, $A_c$. When the pipe is filled with oil or gas, the impedance of $A_s$ is lower than the impedance of $E_c$ and $A_c$. This results in the displacement current $I_{oil}$ or $I_{gas}$ of Fig. 8. If the pipe is filled with a conducting fluid such as salt water, the field within the pipe interior is shorted out, so that the net current $I_{saltwater}$ is limited only by the impedance of $E_c$ and/or $A_c$ so that the largest current flows. If the fluid in the pipe is only partially conductive, the impedance element $A_s$ has a resistive component resulting in the current $I_p$ of Fig. 8. The current $I_p$ has a phase angle $\phi$ relative to the driving voltage $V_{in}$. Depending on the contents of the pipe, the magnitude and/or phase of the displacement current will vary. In general, the current resulting from a partially conducting fluid will lie along the locus shown in Fig. 8.

Returning to Fig. 7, Fig. 7 shows the model circuit 90 and voltage source 101 as forming one arm 92 of a capacitance bridge 93. The other arm 102 of the capacitance bridge is formed by the variable voltage source 103 (which may be implemented by an operational amplifier) and a capacitance $C_m$. A variable capacitance $C_v$ may be provided for balancing adjustments. Illustratively, the bridge may be designed to be in balance when the fluid in the pipe is purely dielectric, e.g., having the dielectric constant of pure oil. Then if some gas is in the pipe, the bridge could become unbalanced in the direction of reduced dielectric constant. Alternatively, if bubbles of pure water are present in the pipe, then the bridge would be unbalanced in the direction of increased dielectric constant. The phase angle of the current, relative to the driving voltage $V_{in}$ indicates either gas or water, even if the magnitude of the current in both cases happens to be identical.

If the bridge 93 is unbalanced, the current at the node 105 is converted to a voltage by the current-to-voltage converter 107 which may be implemented by an op-amp. The bridge 93 of Fig. 7 forms part of the sensing circuitry of Fig. 6 (e.g., the A sensor circuit of Fig. 6).

The voltage output of the current-to-voltage converter 107 is then transmitted to a phase detector 109 which detects the phase of the signal relative to the input voltage $V_{in}$ and an envelope detector 111 which detects the magnitude of the signal. These signals are then digitized and transmitted to a main computer in a manner to be discussed below. A similar circuit including capacitance bridge, phase detector, and envelope detector is provided for other electrodes in set 70 of Fig. 1 (e.g., electrode $B_1$) and for the electrodes of set 80 of Fig. 1.

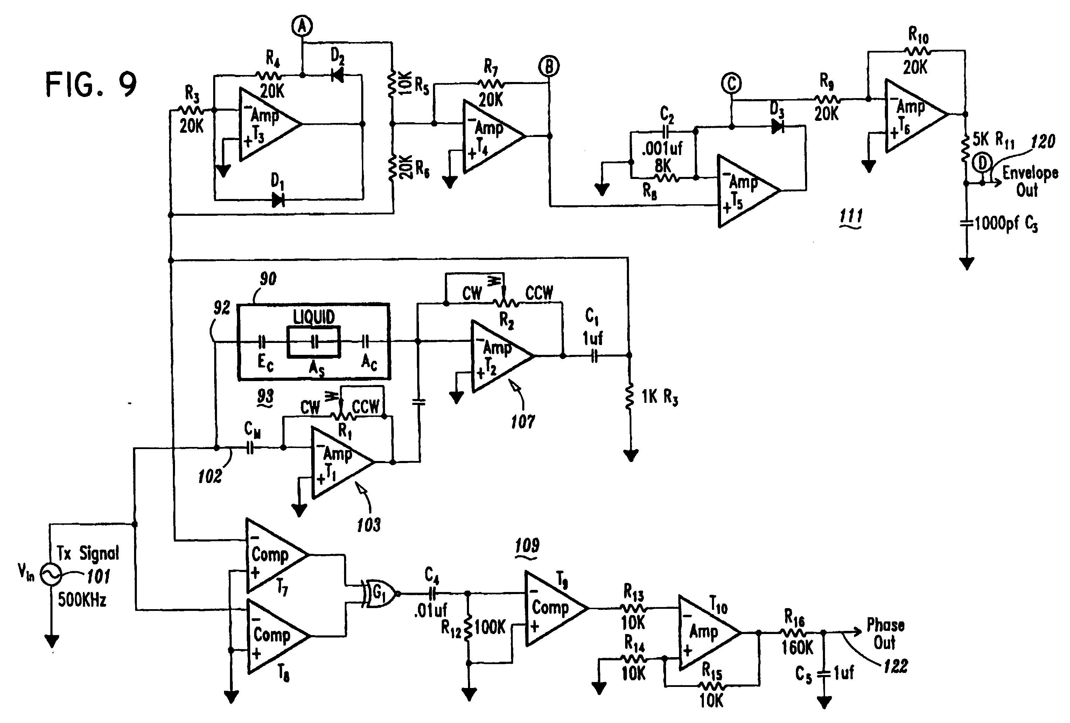

A more detailed schematic of the sensing circuitry is shown in Fig. 9. Fig. 9 includes the bridge 93, the model 90 of the pipe and electrode system, the driving voltage source 101 and the balancing arm 102, which comprises the capacitor $C_m$ and the variable voltage source 103. The variable voltage source 103 is formed from an op-amp (operational amplifier) $T_1$ and variable resistor $R_1$. The current-to-voltage converter 107 is formed from op-amp $T_2$, variable resistor $R_2$, resistor $R_3$ and capacitor $C_1$. The envelope detector 111 comprises the op-amps $T_3$, $T_4$, $T_5$, $T_6$, the resistors $R_3$, $R_4$, $R_5$, $R_6$, $R_7$, $R_8$, $R_9$, $R_{10}$, $R_{11}$, the diodes $D_1$, $D_2$, $D_3$, and the capacitors $C_2$, and $C_3$. The output of the envelope detector 111 at the output 120 is the magnitude or envelope of the displacement current. The phase detector 109 comprises the comparitors $T_7$ and $T_8$, the XOR gate $G_1$, the comparator $T_9$, the capacitor $C_4$, the resistor $R_{12}$, the op-amp $T_{10}$, the resistors $R_{13}$, $R_{14}$, $R_{15}$, and $R_{16}$, and the capacitor $C_5$. The output of the phase detector 109 at the output 122 is the phase of the displacement current relative to $V_{in}$.

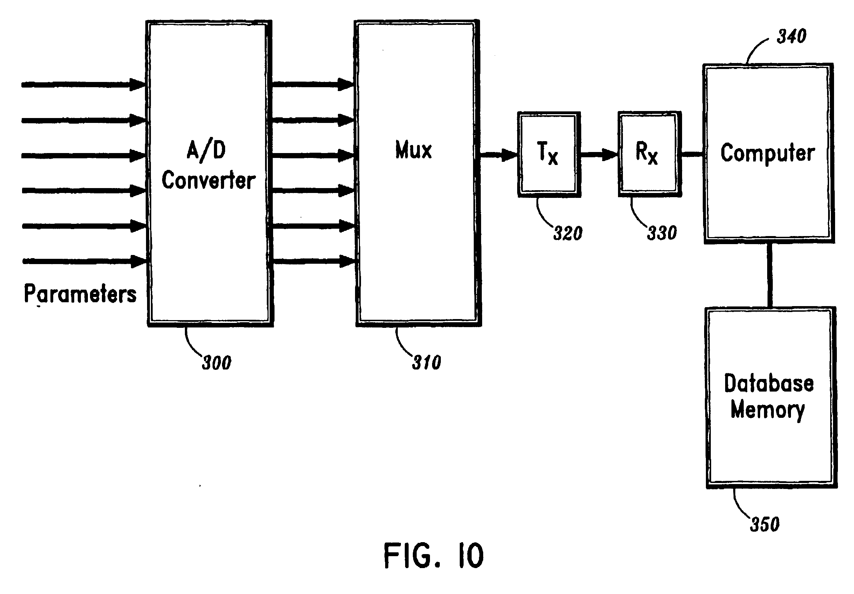

As indicated above, the output of the envelope detector and the output of the phase detector are digitized and transmitted to a remotely located main computer. Fig. 10 shows a circuit for accomplishing this. The parameters detected by the various sensors non-intrusively coupled to the pipe section 10 of Fig. 1 are input to an A/D converter 300 and converted to digital form. Note that the parameters may include magnitudes and phases of displacement currents flowing between particular electrodes, including electrodes from one set having a first location along the pipe section, and electrodes from one or more additional sets located at other locations along the pipe. The parameters may also include parameters obtained from transit-time sensors, reflexor sensors, or bubble detector sensors. The parameters may be different depending on the application. In some applications, only parameters obtained from displacement currents may be utilized and the transit-time, reflexor, and bubble detection may be omitted.

As shown in Fig. 10, the parameter signals are converted to digital form by A/D converter 300. The digitized parameter signals are then multiplexed using MUX 310. The multiplexed signal is then transmitted remotely by transmitter 320. The transmitted parameters are received by the receiver 330 and transmitted to the computer 340.

The computer 340 uses the received parameters to provide information about the state of the multiphase fluid inside the pipe section. The computer 340 also uses a database stored in the memory 350. The database in memory 340 may be viewed as an N-dimensional matrix (N=1, 2, 3,...) which relates particular combinations of the parameters to particular known states inside the pipe section. In a preferred embodiment of the invention, the database is determined empirically by measuring parameter values for known conditions or states in the pipe. Thus, in this preferred embodiment of the invention, the computer does not use the received parameters to evaluate equations of state. An alternative approach that might be useful in particular circumstances might be for the computer to use the received parameters to evaluate equations of state.

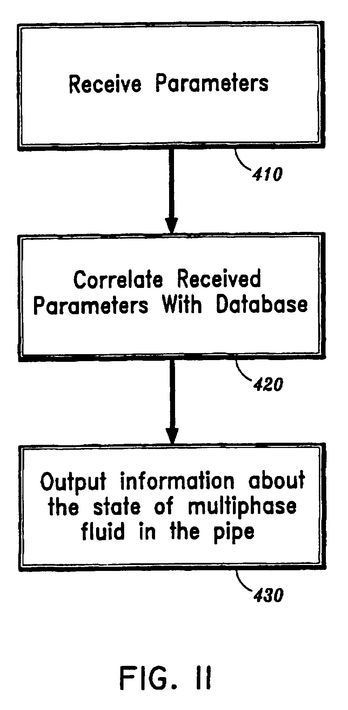

The algorithm used by the computer 340 to determine information about the state of the multiphase fluid inside the pipe section is illustrated in the flow chart of Fig. 11. The computer receives the parameters (step 410). The computer correlates the received parameters with the database, to find the database entry which is closest to the received parameters (step 420). This database entry contains information about the state of the multiphase fluid in the pipe section. The computer then outputs this information (step 430). As indicated above, the database is stored in a memory associated with the computer.

One significant feature of the invention is that it can be used to generate time based information such as flow rate information. This may be accomplished using the two sets of electrodes 70, 80 of Fig. 1. For example, the first set of electrodes 70 may generate a certain set of parameters at a first time. These parameters can be used by the computer 340 to identify a certain state of the multiphase fluid at the location of the first set of electrodes at the first time. The fluid will then flow down the pipe section 10 to the location of the second set of electrodes 80. These electrodes will generate at a second time a set of parameters similar to that generated by the first set of electrodes at the first time. This will indicate the time it takes the fluid to travel the known distance between the sets of electrodes by correlating these parameters.

In short, a multiphase fluid sensor and sensing method has been disclosed. The invention is especially applicable for non-intrusively determining the state of an oil/gas/water mixture. Finally, the above-described embodiments are intended to be merely illustrative of the invention. Numerous alternative embodiments may be devised by those having ordinary skill in the art without departing from the spirit and scope of the following claims.

**Claims**

1. Apparatus for non-intrusively determining information which characterizes the state of a multiphase fluid, such as an oil/gas/water mixture, flowing in a pipe (10), said apparatus comprising:

    (a) one or more non-intrusive sensors (32, 34, 52, 54, 60) coupled to said pipe for measuring actual values of one or more parameters, which actually measured values depend upon the state of the multiphase fluid flowing in the pipe, and

    (b) a computer (340) for receiving said actually measured values, for accessing a database which is a mapping of values of said one or more parameters with known states of said multiphase fluid, and for correlating said actually measured values of said one or more parameters with said database to determine a particular state of said multiphase fluid which corresponds to said actually measured values.

2. Apparatus according to claim 1 wherein said one or more sensors include a sensing electrode (70, 80) coupled to a wall of said pipe.

3. Apparatus according to claim 2 wherein said sensing electrode is separated from the interior of said pipe by a dielectric material.

4. Apparatus according to claim 2 or 3 wherein said one or more parameters include a phase and a magnitude of a displacement current which flows between a driving electrode coupled to said wall of said pipe and said sensing electrode.

5. Apparatus according to claim 4 wherein said one or more sensors includes an additional sensing electrode coupled to said wall of said pipe and separated longitudinally from said sensing electrode and said one or more parameters include an additional phase and an additional magnitude of an additional displacement current which flows between an additional driving electrode coupled to said wall of said pipe and said additional sensing electrode.

6. Apparatus according to any one of the preceding claims wherein said one or more sensors include a sensor for sensing a transit-time of sonic energy in said multiphase fluid and wherein said one or more parameters include a parameter dependent on said transit-time, or wherein said one or more sensors include a sensor for sensing a change in frequency of sonic energy reflected by particles in said multiphase fluid and said one or more parameters include a parameter dependent on said change in frequency, or wherein said one or more sensors include a bubble detector.

7. Apparatus according to any one of the preceding claims wherein said information which characterizes the state of said multiphase fluid is the relative amount of each phase in said fluid.

8. Apparatus according to any one of the preceding claims wherein said information includes flow rate information.

9. A method of non-intrusively determining information which characterizes the state of a multiphase fluid flowing in a pipe; said method comprising the steps of

(a) using one or more non-intrusive sensors coupled to said pipe, measuring an actual value of one or more parameters, which actually measured values depend upon the state of the multiphase fluid flowing in the pipe,
(b) inputting said actually measured values into a computer, and
(c) using said computer, accessing a database which includes a mapping of values of said one or more parameters with known states of said multiphase fluid, and correlating said actually measured values of said one or more parameters with said database to determine a particular state of said multiphase fluid which corresponds to said actually measured values.

10. A method of generating a database for use in non-intrusive measurements of a multiphase fluid flowing in a pipe, comprising the steps of

(a) for each of a plurality of known states of a multiphase fluid in a pipe, non-intrusively measuring one or more parameters using one or more sensors coupled to a wall of the pipe, and
(b) storing in a memory associated with a computer, information identifying each of said known states and the corresponding parameter values.

11. The method of claim 10 wherein each of said known states is identified by different relative amounts of the individual phases in said multiphase fluid.

12. The method of claim 10 or 11 wherein said non-intrusive measuring step comprises measuring a displacement current between first and second electrodes coupled to a wall of said pipe and said one or more parameters include a magnitude and phase of said displacement current.

13. Apparatus for non-intrusively determining information which characterizes a state of a multiphase fluid, such as an oil/gas/water mixture, flowing in a pipe, said apparatus comprising

a driving electrode separated from the interior of the pipe by a low conductivity or dielectric material for generating a displacement current in said pipe,
a sensing electrode separated from the interior of the pipe by a low conductivity or dielectric material for sensing said displacement current, and
a circuit connected to said sensing electrode for measuring one or more parameters characteristic of said sensed displacement current, said one or more parameters depending on said state of said multiphase fluid.

14. Apparatus according to claim 13 further comprising a computer for accessing a database which maps particular values of said one or more parameters with corresponding states of said multiphase fluid in said pipe, and for correlating said measured parameters of said sensed displacement current with said database to determine a particular state of said multiphase fluid.

15. Apparatus according to claim 14 wherein said computer is located remotely from said circuit and said apparatus further includes a transmitter for transmitting said measured parameters to said computer and a receiver connected to said computer for receiving the transmitted parameters.

16. Apparatus according to any one of claims 13 to 15 wherein said circuit comprises a phase detector and an envelope detector for said detected displacement current and said parameters include a phase and a magnitude of said detected displacement current.

17. Apparatus for non-intrusively determining the relative amount of each phase of a multiphase fluid flowing in a pipe, as well as flow rate information of said multiphase fluid, said apparatus comprising:

a first set of electrodes located on the circumference of said pipe and separated from a first interior space of said pipe by a dielectric material, said first set of electrodes including a first generating electrode for generating a first displacement current in said first interior space of said pipe and a first sensing electrode for sensing said first displacement current,
a second set of electrodes located on the circumference of said pipe and longitudinally displaced from said first set of electrodes, said second set of electrodes being separated from a second interior space of said pipe by a dielectric material, said second set of electrodes including a second generating electrode for generating a second displacement current in said second interior space of said pipe and a second sensing electrode for sensing said second displacement current,

circuitry connected to said first sensing electrode for measuring a first magnitude and a first phase of said first displacement current and connected to said second sensing electrode for measuring a second magnitude and a second phase of said second displacement current, and

a computer in communication with said circuitry for correlating said first measured phase, said first measured magnitude, said second measured phase and said second measured magnitude with a database in order to output information about the relative amount of each phase in said multiphase fluid and flow rate information about said multiphase fluid.

FIG. 1

$$F = k \frac{\triangle t}{\tau_L}$$

## FIG. 2

$$F = k \triangle f$$
$$where \; \triangle f = (f_T - f_R)$$

## FIG. 3

FIG. 4

Top

Transit-time

34

54 Reflexor

60 Bubble Detector

To receive Amplifier and Detector

Transmit Pulses

EP 0 947 810 A1

# FIG. 5

69

67

A₁

Electrode

64 Ceramic

63 Insulator

E₁

62 Electrical
Shield

61 Insulator

66

10 Pipe Wall

68 Electrode Terminal

FIG. 6

FIG. 7

IMPEDANCE SENSOR
VECTOR DIAGRAM
FIG. 8

FIG. 9

FIG. 10

Receive Parameters

*410*

Correlate Received
Parameters With Database

*420*

Output information about
the state of multiphase
fluid in the pipe

*430*

FIG. 11

# EP 0 947 810 A1

**European Patent Office**

## EUROPEAN SEARCH REPORT

Application Number

EP 99 30 1389

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 691 536 A (INST FRANCAIS DU PETROL) 10 January 1996 * page 4, line 45 - page 7, line 18; figures 1-3 * | 1,7-11, 13,14 | G01F1/74 |
| X | EP 0 280 814 A (TEXACO DEVELOPMENT CORP) 7 September 1988 * column 2, line 26 - column 4, line 31; figures 1-4 * | 1,7-11, 13,14 | |
| A | EP 0 691 527 A (INST FRANCAIS DU PETROL) 10 January 1996 * column 6, line 10 - column 13, line 58; figures 1-3 * | 1,6,9, 13,17 | |
| A | US 5 396 806 A (DAY DAVID R  ET AL) 14 March 1995 * column 6, line 66 - column 8, line 46; figures 1-4 * | 1,9,13, 17 | |
| A | WO 97 39314 A (MOBIL OIL CORP) 23 October 1997 * page 4, line 26 - page 8, line 25; figures 1-5 * | 1,9,13, 17 | TECHNICAL FIELDS SEARCHED (Int.Cl.6) G01F |

The present search report has been drawn up for all claims

| Place of search | Date of completion of the search | Examiner |
|---|---|---|
| THE HAGUE | 2 June 1999 | Heinsius, R |

**ANNEX TO THE EUROPEAN SEARCH REPORT
ON EUROPEAN PATENT APPLICATION NO.**  EP 99 30 1389

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-1999

| Patent document cited in search report | | Publication date | Patent family member(s) | | Publication date |
|---|---|---|---|---|---|
| EP 0691536 | A | 10-01-1996 | FR | 2722292 A | 12-01-1996 |
| | | | FR | 2722293 A | 12-01-1996 |
| | | | AU | 690975 B | 07-05-1998 |
| | | | AU | 2178995 A | 18-01-1996 |
| | | | BR | 9503250 A | 09-07-1996 |
| | | | CA | 2153457 A | 09-01-1996 |
| | | | JP | 8193962 A | 30-07-1996 |
| | | | NO | 952717 A | 09-01-1996 |
| | | | US | 5793216 A | 11-08-1998 |
| EP 0280814 | A | 07-09-1988 | US | 4751842 A | 21-06-1988 |
| | | | CA | 1278343 A | 27-12-1990 |
| | | | DE | 3785185 A | 06-05-1993 |
| | | | DK | 691587 A | 06-07-1988 |
| EP 0691527 | A | 10-01-1996 | FR | 2722297 A | 12-01-1996 |
| | | | AU | 692246 B | 04-06-1998 |
| | | | AU | 2173995 A | 18-01-1996 |
| | | | BR | 9503078 A | 09-07-1996 |
| | | | CA | 2153192 A | 06-01-1996 |
| | | | JP | 8043164 A | 16-02-1996 |
| | | | NO | 952645 A | 08-01-1996 |
| | | | US | 5792962 A | 11-08-1998 |
| US 5396806 | A | 14-03-1995 | NONE | | |
| WO 9739314 | A | 23-10-1997 | EP | 0894245 A | 03-02-1999 |
| | | | NO | 984815 A | 15-10-1998 |

EPO FORM P0459

For more details about this annex : see Official Journal of the European Patent Office, No. 12/82